# EUROPEAN PATENT APPLICATION

(11) **EP 4 047 486 A1**
(43) Date of publication of application: **24.08.2022**
(21) Application number: 21755674.5
(22) Date of filing: 29.01.2021
(51) Int. Cl.: G06F 16/172, G06F 16/14

(54) **METHOD FOR OPTIMIZING OLAP PRE-COMPUTATION ENGINE ON BASIS OF OBJECT STORAGE, AND APPLICATION THEREOF**

(30) Priority: 23.12.2020 CN 202011544066
(71) Applicant: KUYUN (SHANGHAI) INFORMATION TECHNOLOGY CO., LTD., Shanghai 200120 (CN)
(72) Inventor: GU, Danchao, Shanghai 200120 (CN); LI, Dong, Shanghai 200120 (CN); LI, Yang, Shanghai 200120 (CN); HAN, Qing, Shanghai 200120 (CN)
(74) Representative: Sach, Greg Robert
(86) International application number: PCT/CN2021/074311
(87) International publication number: WO 2022/134269

(57) **Abstract**

The disclosure provides an Online Analytical Processing (OLAP) precomputation engine optimization method based on an object storage, and application, and provides three optimization directions: reduction of an object renaming operation, data consistency check, and inversion of a logical path of an index file. A mapping relationship of a file before and after renaming is matched through a file mapping table added to a metadata layer, and a renaming operation on a bottom layer of a file system is reduced. Logical path inversion of a partition directory hierarchical structure of the file is corresponded to a prefix of the file in the object storage, and the object storage is rapidly queried and read. Logical verification is added to a read operation, a deletion operation, and a write operation, and the data consistency is checked. According to the disclosure, a read-write mode of an OLAP engine during the use of the object storage is optimized, the execution efficiency of the engine is improved, and a response to an analysis requirement of an upper-layer report system is accelerated. Based on the disclosure, a high-efficiency OLAP computation query execution engine may be constructed, the construction efficiency is improved, and a query is accelerated.

## Description

### Technical Field

The disclosure relates to the technical field of data analysis, and in particular to an Online Analytical Processing (OLAP) precomputation engine optimization method based on an object storage, and application.

### Background

At present, Online Analytical Processing (OLAP) is a software technology, which enables an analyst to rapidly, consistently, and interactively observe information from various aspects to achieve the purpose of deeply understanding data. A main OLAP engine in the market focuses on three hot issues: data volume, performance and flexibility.

An OLAP precomputation engine based on open source Apache Kylin uses native computation and storage of cloud to construct a rapid, flexible, cost-effective big data analysis application, and can be seamlessly connected with an existing data warehouse and cloud storage on the cloud, for example, Amazon S3, Azure Blob Storage, Snowflake, and the like. High-performance OLAP service on the cloud can not be separated from the selection of a storage medium, and a storage solution on the cloud generally uses an object storage. Compared with a traditional block storage and file storage, distributed architecture used by the storage solution on the cloud has the characteristics of mass storage and high concurrency. However, due to the use of network communication, there is a network IO limitation when accessing the same resource concurrently. In addition, the object storage does not allow data to be modified according to a fragment, and only an entire object can be modified, which influences the write performance. With respect to a data consistency issue, Amazon S3 provides final consistency for certain operations, therefore, new data may not be available immediately after uploading, which may result in incomplete data loading or loading outdated data.

Since the OLAP precomputation engine accelerates the query performance through a concept of exchanging time with space and has a high requirement on the data accuracy and the data read-write performance, aiming at the characteristic of the object storage, the disclosure provides an OLAP precomputation engine optimization method based on an object storage, which optimizes a read-write mode of the OLAP engine during the use of the object storage, improves the execution efficiency of the engine and accelerates a response to an analysis requirement of an upper-layer report system.

### Summary

Therefore, the disclosure provides an Online Analytical Processing (OLAP) precomputation engine optimization method based on an object storage, and application. The technical solution is as follows.

In one aspect, the disclosure provides an OLAP precomputation engine optimization method based on an object storage.

The method includes the following steps.

S1: an object renaming operation in the object storage is reduced.

S2: when an OLAP precomputation engine implements query in the object storage, a logical path of an index file is inverted.

S3: when the OLAP precomputation engine implements read, deletion, and write operations in the object storage, data consistency is checked.

Further, S1 includes the following detailed steps.

S1.1: on an application level of the OLAP engine, in a process of modifying and constructing a model and a new index, a file renaming mapping table is added to a metadata layer.

S1.2: after receiving a renaming request for renaming a file A as a file B sent by the OLAP precomputation engine, a mapping relationship is added between the file A before renaming and the file B after renaming to a file mapping table of the metadata layer.

S1.3: after receiving a query request for querying the file B sent by the OLAP precomputation engine, the mapping relationship between the file A and the file B is queried in the file renaming mapping table of the metadata layer, a record matched with the file B is converted into the file A, and the file A is read in the object storage.

Further, S2 includes the following detailed steps.

S2.1: a path adaptation mechanism is added to retrieval logic of a bottom layer of the OLAP engine, and logical path inversion of a partition directory hierarchical structure of the file is corresponded to a prefix of the file in the object storage.

S2.2: after receiving the query request sent by the OLAP precomputation engine, the logical path of the index file is inverted through the path adaptation mechanism, and the file corresponding to the prefix is read in the object storage.

Further, in S3 that data consistency is checked, when the OLAP engine reads an object, a retry mechanism for controlling retry interval speed increase is added.

Further, in S3 that data consistency is checked, logical verification is added to the read operation, the deletion operation and the write operation, whether the file exists is checked before reading, whether the file does not exist is checked again after deleting the object, and responsive to new construction of an object, and if the file exists, the object can be newly constructed only after deleting the object.

Further, S3 that a read operation is performed and data consistency is checked includes the following detailed steps.

S3.1.1: whether a file exists is checked; if the file does not exist, S3.1.2 is executed; and if the file exists, S3.1.4 is executed.

S3.1.2: whether the number of retries set by a retry mechanism is exceeded is judged; if the number of retries is not exceeded, S3.1.3 is executed; and if the number of retries is exceeded, the read operation is ended.

S3.1.3: waiting is performed according to a retry interval controlled by a system, S3.1.1 is returned to, and whether the file exists is checked again.

S3.1.4: a file read operation is executed.

Further, S3 that a deletion operation is performed and data consistency is checked includes the following detailed steps.

S3.2.1: a deletion command is executed.

S3.2.2: whether the file exists is checked; if the file exists, S3.2.1 is returned to execute the deletion command again; and if the file does not exist, the deletion operation is ended.

Further, S3 that a deletion operation is performed and data consistency is checked includes the following detailed steps.

S3.3.1: whether the file exists is checked; if the file exists, S3.3.2 is executed; and if the file does not exist, S3.3.3 is executed.

S3.3.2: a deletion command is executed; and S3.3.1 is returned to check whether the file exists again.

S3.3.3: a write command is executed.

S3.3.4: waiting is performed until the write command is finished.

S.3.3.5: whether the file exists is checked again; if the file does not exist, S3.3.3 is returned to execute the write command again; and if the file exists, it is verified that the write operation is completed and ending is performed.

In a second aspect, the disclosure provides an OLAP precomputation engine optimization system based on an object storage, applying the above OLAP precomputation engine optimization method based on an object storage, including at least one of a file renaming conversion module, an inverted path conversion module, and a data consistency check module.

The file renaming conversion module is configured to match a mapping relationship of a file before and after renaming through a file mapping table added to a metadata layer, and reduce a renaming operation on a bottom layer of a file system.

The inverted path conversion module is configured to add a path adaptation mechanism to retrieval logic of the bottom layer of an OLAP engine, correspond logical path inversion of a partition directory hierarchical structure of the file to a prefix of the file in the object storage; and implement rapid query and reading of the object storage.

The data consistency check module is configured to add logical verification to a read operation, a deletion operation, and a write operation and check data consistency.

In a third aspect, the disclosure provides a storage medium having a computer program stored therein. The computer program is executed to execute the above OLAP precomputation engine optimization method based on an object storage.

In a fourth aspect, the disclosure provides an OLAP precomputation engine optimization method based on an object storage, including the following operations.

Operation instruction information is received, and any one operation of a read operation, a deletion operation, and a write operation is performed based on the operation instruction information.

Before performing an ending step of the deletion operation and the write operation, whether an object file exists is checked, if the object file exists, whether the object file does not exist is checked again after deleting the object file, the subsequent ending step can be executed only after checking that the object file does not exist.

When performing the read operation, whether the object file exists is checked, if the object file exists, the file is read, and if the object file does not exist, a retry is performed.

The operation that when performing the read operation, whether the object file exists is checked, if the object file exists, the file is read, and if the object file does not exist, a retry is performed includes the following operations.

Whether the file exists is checked; if the file does not exist, S3.1.2 is executed; and if the file exists, S3.1.4 is executed.

S3.1.2: whether the number of retries set by a retry mechanism is exceeded is judged; if the number of retries is not exceeded, S3.1.3 is executed; and if the number of retries is exceeded, the read operation is ended.

S3.1.3: waiting is performed according to a retry interval controlled by a system, S3.1.1 is returned to, and whether the file exists is checked again.

S3.1.4: a file read operation is executed.

Further before performing an ending step of the deletion operation and the write operation, whether an object file exists is checked, if the object file exists, whether the object file does not exist is checked again after deleting the object file, the following ending step can be executed only after checking that the object file does not exist.

S3.2.1: a deletion command is executed.

S3.2.2: whether the file exists is checked; if the file exists, S3.2.1 is returned to execute the deletion command again; and if the file does not exist, the deletion operation is ended.

Before performing an ending step of the deletion operation and the write operation, whether an object file exists is checked, if the object file exists, whether the object file does not exist is checked again after deleting the object file, the following ending step can be executed only after checking that the object file does not exist.

S3.3.1: whether the file exists is checked; if the file exists, S3.3.2 is executed; and if the file does not exist, S3.3.3 is executed.

S3.3.2: a deletion command is executed; and S3.3.1 is returned to check whether the file exists again.

S3.3.3: a write command is executed.

S3.3.4: waiting is performed until the write command is finished.

S.3.3.5: whether the file exists is checked again; if the file does not exist, S3.3.3 is returned to execute the write command again; and if the file exists, it is verified that the write operation is completed and ending is performed.

Further, the following steps are included.

S1.1: on an application level of the OLAP engine, in a process of modifying and constructing a model and a new index, a file renaming mapping table is added to a metadata layer.

S1.2: after receiving a renaming request for renaming a file A as a file B sent by the OLAP precomputation engine, a mapping relationship is added between the file A before renaming and the file B after renaming to a file mapping table of the metadata layer.

S1.3: after receiving a query request for querying the file B sent by the OLAP precomputation engine, the mapping relationship between the file A and the file B is queried in the file renaming mapping table of the metadata layer, a record matched with the file B is converted into the file A, and the file A is read in the object storage.

Further, the following steps are included.

S2.1: a path adaptation mechanism is added to retrieval logic of a bottom layer of the OLAP engine, and logical path inversion of a partition directory hierarchical structure of the file is corresponded to a prefix of the file in the object storage.

S2.2: after receiving the query request sent by the OLAP precomputation engine, the logical path of the index file is inverted through the path adaptation mechanism, and the file corresponding to the prefix is read in the object storage.

In a fifth aspect, the disclosure provides an OLAP precomputation engine optimization method based on an object storage, including the following operations.

A file renaming mapping table is added to an OLAP engine.

After receiving a renaming request for renaming a file A as a file B sent by the OLAP precomputation engine, a mapping relationship between the file A before renaming and the file B after renaming is added to a file mapping table of the metadata layer.

After receiving a query request for querying the file B sent by the OLAP precomputation engine, the mapping relationship between the file A and the file B is queried in the file renaming mapping table of the metadata layer, a record matched with the file B is converted into the file A, and the file A is read in the object storage.

In a sixth aspect, the disclosure provides an OLAP precomputation engine optimization apparatus based on an object storage, including a receiving module, a first checking module, and a second checking module.

The receiving module is configured to receive operation instruction information, and perform any one operation of a read operation, a deletion operation, and a write operation based on the operation instruction information.

The first checking module is configured to, before performing an ending step of the deletion operation and the write operation, check whether an object file exists, if the object file exists, check whether the object file does not exist again after deleting the object file, wherein the subsequent ending step can be executed only after checking that the object file does not exist.

The second checking module is configured to, responsive to performing the read operation, check whether the object file exists, if the object file exists, read the file, and if the object file does not exist, perform a retry.

In a seventh aspect, the disclosure provides an OLAP precomputation engine optimization apparatus based on an object storage, including a mapping table adding module, a mapping relationship adding module, and a matching module.

The mapping table adding module is configured to add a file renaming mapping table to an OLAP engine.

The mapping relationship adding module is configured to, after receiving a renaming request for renaming a file A as a file B sent by the OLAP precomputation engine, add a mapping relationship between the file A before renaming and the file B after renaming to a file mapping table of the metadata layer.

The matching module is configured to, after receiving a query request for querying the file B sent by the OLAP precomputation engine, query the mapping relationship between the file A and the file B in the file renaming mapping table of the metadata layer, convert a record matched with the file B into the file A, and read the file A in the object storage.

An eighth aspect of the embodiment of the disclosure provides an electronic device, including: at least one processor, and a memory in communication connection with the at least one processor, wherein the memory stores a computer program executable by the at least one processor, the computer program being executed by the at least one processor, so that the at least one processor executes various methods possibly designed by the first aspect, the fourth aspect and the fifth aspect of the disclosure.

The disclosure provides an OLAP precomputation engine optimization method based on an object storage, and application. Form three directions: reduction of an object renaming operation, data consistency check, and inversion of a logical path of an index file, a read-write mode of the OLAP engine during the use of the object storage is optimized, the execution efficiency of the engine is improved, a response to an analysis requirement of an upper-layer report system is accelerated, and the problems existing in the conventional art are solved. Index logic is constructed by utilizing the file mapping table, the renaming operation of object storage is reduced, and the construction efficiency is accelerated. The OLAP engine increases the throughput of concurrent read by inverting the object path under large data volume and high concurrency, so that the query performance is obviously improved. The OLAP engine ensures an optimization solution with high data consistency in a high concurrency read-write scene, so that the situation that a task fails or a query result is inaccurate due to data inconsistency in query construction is reduced. Based on the disclosure, a high-efficiency OLAP computation query execution engine may be constructed, the construction efficiency is improved, and a query is accelerated.

### Brief Description of the Drawings

The accompanying drawings which constitute a part of the present application are used to provide a further understanding of the present application, so that other features, objects, and advantages of the present application become more apparent. The drawings of exemplary embodiments of the present application and description thereof are provided to explain the present application and are not intended to unduly limit the present application. In the drawings:
FIG. 1 is a schematic diagram of an Online Analytical Processing (OLAP) precomputation engine optimization method based on an object storage provided by the disclosure.
FIG. 2 is a specific flow chart of reducing an object renaming operation in the disclosure.
FIG. 3 is a specific flow chart of inverting a logical path of an index file in the disclosure.
FIG. 4 is a specific flow chart of performing a read operation and checking data consistency in the disclosure.
FIG. 5 is a specific flow chart of performing a deletion operation and checking data consistency in the disclosure.
FIG. 6 is a specific flow chart of performing a write operation and checking data consistency in the disclosure.
FIG. 7 is a structural composition diagram of an Online Analytical Processing (OLAP) precomputation engine optimization system based on an object storage provided by the disclosure.

### Detailed Description of the Embodiments

To make the solutions of the present application clearer to those skilled in the art, the technical solutions in embodiments of the present application will be clearly and completely described below with reference to the drawings in the embodiments of the present application. Apparently, the described embodiments are only a part of the embodiments of the present application and not all the embodiments. Based on the embodiments in the present application, all other embodiments obtained by those skilled in the art without involving any inventive effort fall within the protection scope of the present application.

It is to be noted that the terms "first", "second", and the like in the specification and claims of the present application and in the above drawings are used to distinguish similar objects and unnecessarily to describe a specific sequence or sequential order. It will be appreciated that such data may be interchangeable where appropriate, so that the embodiments of the present application described herein can be implemented in a sequence except for those illustrated or described herein. Furthermore, the terms "include" and "having", as well as any variations thereof, are intended to cover a non-exclusive inclusion, for example, a process, a method, a system, a product, or a device that includes a series of steps or elements and is not necessarily limited to those expressly listed steps or elements, but may contain other steps or elements not expressly listed or inherent to such process, method, product, or device.

In the present application, orientations or positional relationships indicated by the terms "upper", "lower", "left", "right", "front", "rear", "top", "bottom", "inner", "outer", "middle", "vertical", "horizontal", "transverse", "longitudinal", and the like are based on the orientations or positional relationships shown in the drawings. These terms are mainly used to better describe the present application and the embodiments thereof and are not intended to limit that an indicated device, element, or component necessarily has a particular orientation, or is necessarily constructed and operated in the particular orientation.

Moreover, some of the above terms, in addition to being used to indicate the orientation or positional relationship, may also be used to indicate other meanings, for example, the term "upper" may also be used to indicate an attachment or connection relationship in some situations. The specific meaning of those terms in the present application may be understood by those of ordinary skill in the art according to specific situations.

In addition, the term "a plurality of" should have the meaning of two or more.

It is to be noted that the embodiments in the present application and the features in the embodiments may be combined with one another without conflict. The present application will now be described below in detail with reference to the drawings and the embodiments.

### Embodiment 1

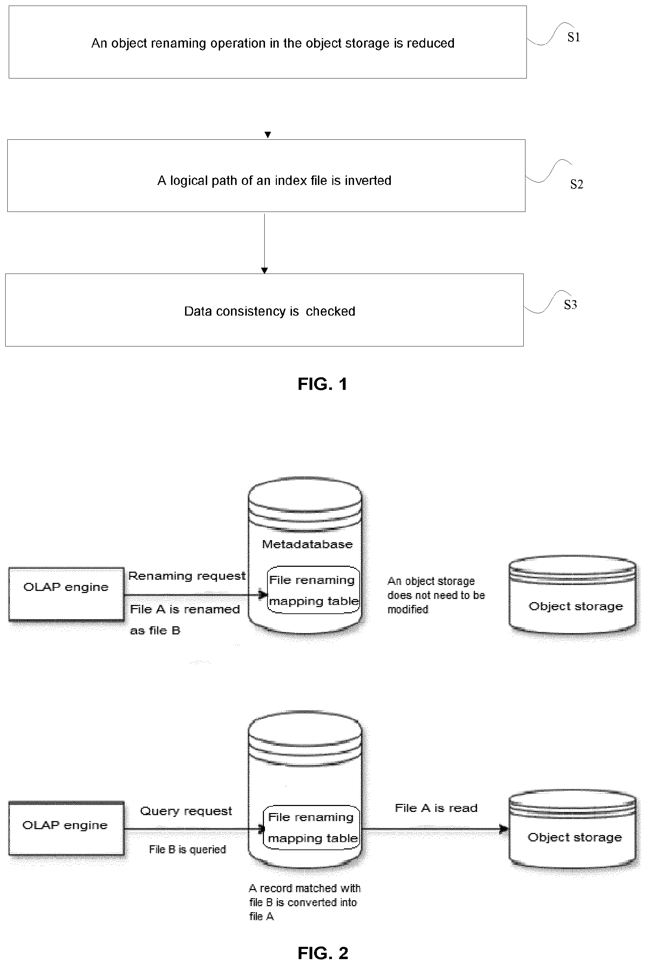

The embodiment 1 of the disclosure provides an OLAP precomputation engine optimization method based on an object storage, as shown in FIG. 1, including the following steps.

S1: an object renaming operation in the object storage is reduced.

When the disclosure is implemented, Amazon S3 is mainly used as the object storage. The renaming operation in the object storage is actually a copy and deletion operation. The copy and deletion operation is different from an operation of only modifying an index file in a file storage, the efficiency of the copy and deletion operation is very low, and the performance is influenced. For the direct modification of an object name, a new object needs to be copied first, and then an original object is deleted. For a logical directory renaming operation, a file under a whole directory needs to be traversed first for copying, so that time and space costs are relatively high. Therefore, the disclosure provides an optimization direction of reducing the object renaming operation. S1 of the disclosure includes the following detailed steps.

S1.1: on an application level of the OLAP engine, in a process of modifying and constructing a model and a new index, a file renaming mapping table is added to a metadata layer.

S1.2: after receiving a renaming request for renaming a file A as a file B sent by the OLAP precomputation engine, a mapping relationship is added between the file A before renaming and the file B after renaming to a file mapping table of the metadata layer, and the object storage does not need to be changed.

S1.3: after receiving a query request for querying the file B sent by the OLAP precomputation engine, the mapping relationship between the file A and the file B is queried in the file renaming mapping table of the metadata layer, a record matched with the file B is converted into the file A, and the file A is read in the object storage.

FIG. 2 shows a specific flow of reducing an object renaming operation. According to S1 that a renaming operation on a bottom layer of a file system is reduced in the disclosure, the problem of poor performance of the renaming operation of the object storage is avoided.

S2: when an OLAP precomputation engine implements query in the object storage, a logical path of an index file is inverted.

The object storage does not physically have a directory hierarchical structure. Taking Amazon S3 as an example, all objects are distributed in each physical storage medium in the form of multiple copies according to an object key prefix. An Amazon S3 storage bucket may support 3500 PUT/COPY/POST/DELETE or 5500 GET/HEAD requests per partition prefix per second. Amazon S3 does not limit the number of the prefixes in the storage bucket. The OLAP engine scans millions or more index files in a large data volume and high concurrency query scene. The index files in the OLAP engine are generally stored in fragments according to logical partition columns, and if the partition columns are not specified, the index files are also fragmented according to a default size of the file, so that in one index, a large number of objects may exist in the same prefix according to the data volume, a request limitation is liable to trigger, and further, the query is slowed down.

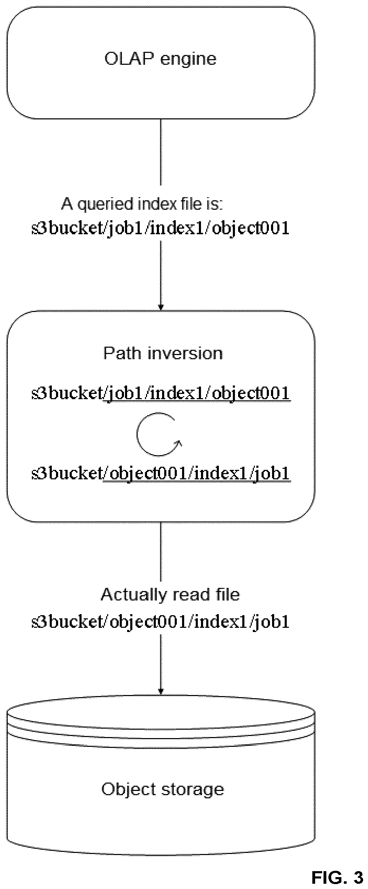

Aiming at the problems, the disclosure provides one optimization direction: inversion of the logical path of the index file. According to one specific embodiment of the disclosure, the logical path: s3bucket/job1/index1/object001 of a partition directory hierarchical structure of an original file is inverted and stored as a prefix form: s3bucket/object001/index1/job1 of the file in the object storage. FIG. 3 shows a specific flow of inverting the logical path of the index file. S2 of the disclosure includes the following detailed steps.

S2.1: a path adaptation mechanism is added to retrieval logic of a bottom layer of the OLAP engine, and logical path inversion of a partition directory hierarchical structure of the file is corresponded to a prefix of the file in the object storage, so that each fragment object has a unique prefix.

S2.2: after receiving the query request sent by the OLAP precomputation engine, the logical path of the index file is inverted through the path adaptation mechanism, and the file corresponding to the prefix is read in the object storage.

Through utilization of the optimization method in S2, the index files hit by the query are distributed in different prefixes as much as possible. Through parallel read, the read performance may be optimized for the object storage on the basis of not influencing an upper-layer application, sub-second-level query under large data volume is realized, the multi-instance aggregation throughput of the OLAP engine is maximized, the utilization rate of a network interface is improved to the greatest extent, and the Tb-level transmission rate per second may be obtained.

S3: when the OLAP precomputation engine implements read, deletion, and write operations in the object storage, data consistency is checked.

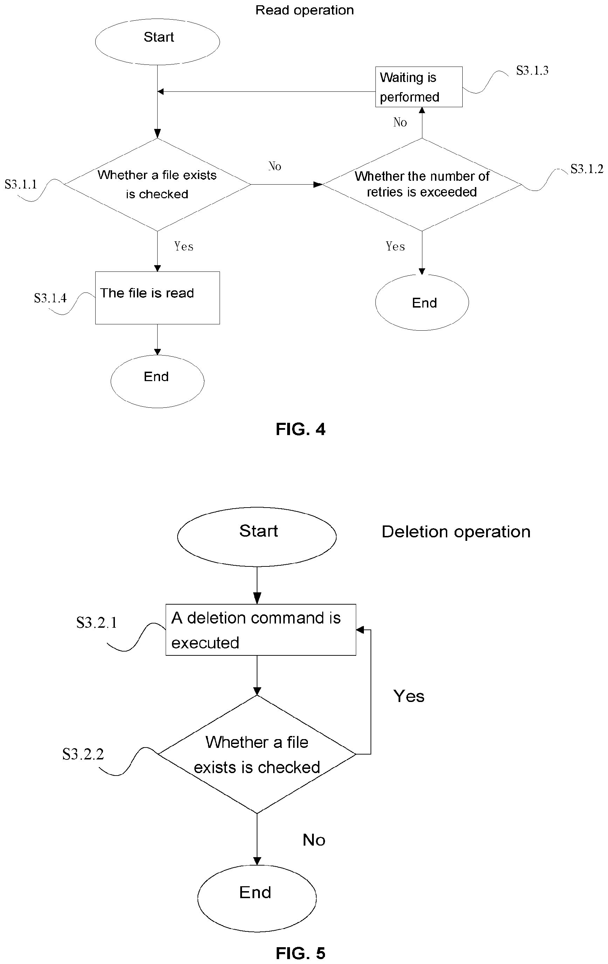

Amazon S3 provides read-after-write consistency for newly constructing a new object. the object can be read only after the object is completely written to a physical storage. Final consistency is provided for update and deletion operations, that is, reading the object during operation returns old data, and Amazon S3 does not provide a lock mechanism. When concurrent write is performed, the last write is taken as the reference. Aiming at the characteristic, in S3 of the disclosure, the OLAP engine adds the retry mechanism when reading the object and reasonably controls retry interval speed increase. In one specific embodiment of the disclosure, the retry mechanism refers to an Exponential Backoff mechanism of Google. In order to realize the high consistency of the data, in S3 of the disclosure, adjustment is performed aiming at an S3FileSystem Application Program Interface (API) interface, and logical verification is added to the read operation, the deletion operation and the write operation in each step so as to check the data consistency. Whether the file exists is checked before reading, whether the file does not exist is checked again after deleting the object, and when an object is newly constructed, if the file exists, the object can be newly constructed only after deleting the object. FIG. 4 to FIG. 6 may more visually embody a data consistency check flow of three operations.

As shown in FIG. 4, the operation that a read operation is performed and data consistency is checked includes the following detailed steps.

S3.1.1: whether a file exists is checked; if the file does not exist, S3.1.2 is executed; and if the file exists, S3.1.4 is executed.

S3.1.2: whether the number of retries set by a retry mechanism is exceeded is judged; if the number of retries is not exceeded, S3.1.3 is executed; and if the number of retries is exceeded, the read operation is ended.

S3.1.3: waiting is performed according to a retry interval controlled by a system, S3.1.1 is returned to, and whether the file exists is checked again.

S3.1.4: a file read operation is executed.

As shown in FIG. 5, the operation that a deletion operation is performed and data consistency is checked includes the following detailed steps.

S3.2.1: a deletion command is executed.

S3.2.2: whether the file exists is checked; if the file exists, S3.2.1 is returned to execute the deletion command again; and if the file does not exist, the deletion operation is ended.

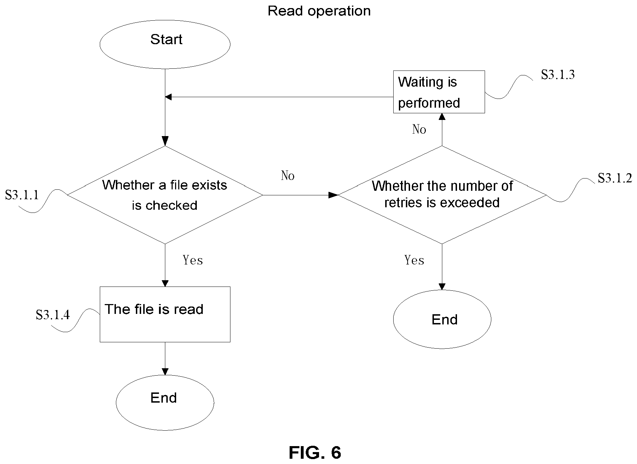

As shown in FIG. 6, the operation that a deletion operation is performed and data consistency is checked includes the following detailed steps.

S3.3.1: whether the file exists is checked; if the file exists, S3.3.2 is executed; and if the file does not exist, S3.3.3 is executed.

S3.3.2: a deletion command is executed; and S3.3.1 is returned to check whether the file exists again.

S3.3.3: a write command is executed.

S3.3.4: waiting is performed until the write command is finished.

S.3.3.5: whether the file exists is checked again; if the file does not exist, S3.3.3 is returned to execute the write command again; and if the file exists, it is verified that the write operation is completed and ending is performed.

In a specific implementation, any one of S1, S2 and S3 of the disclosure may be used alone or any two steps are combined to solve the technical problems.

### Embodiment 2

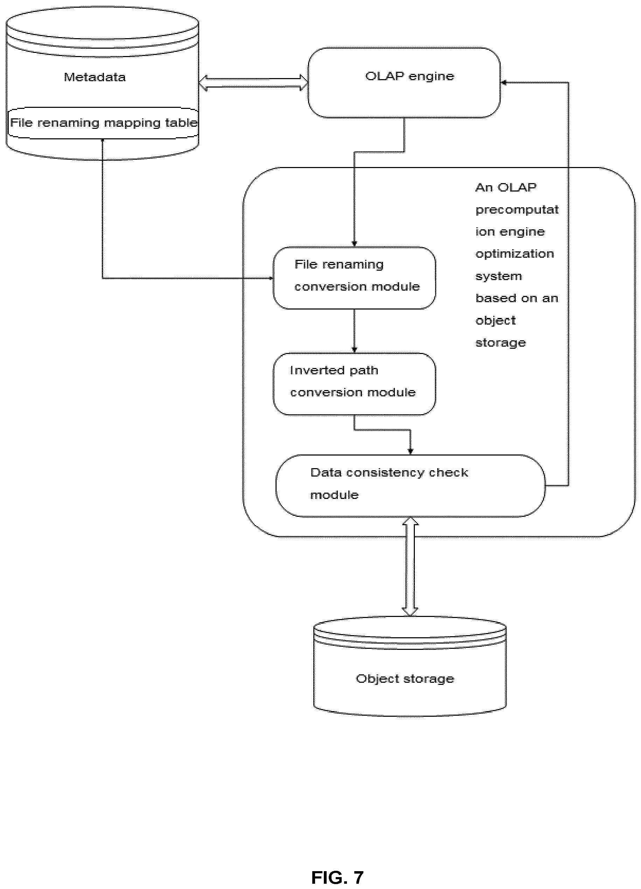

An embodiment 2 of the disclosure, as shown in FIG. 7, provides an OLAP precomputation engine optimization system based on an object storage, applying the above OLAP precomputation engine optimization method based on an object storage, including at least one of a file renaming conversion module, an inverted path conversion module, and a data consistency check module.

The file renaming conversion module is configured to match a mapping relationship of a file before and after renaming through a file mapping table added to a metadata layer, and reduce a renaming operation on a bottom layer of a file system.

The inverted path conversion module is configured to add a path adaptation mechanism to retrieval logic of the bottom layer of an OLAP engine, correspond logical path inversion of a partition directory hierarchical structure of the file to a prefix of the file in the object storage, and implement rapid query and reading of the object storage.

The data consistency check module is configured to add logical verification to a read operation, a deletion operation, and a write operation and check data consistency.

### Embodiment 3

An embodiment 3 of the disclosure provides a storage medium having a computer program stored therein. The computer program is executed to execute the OLAP precomputation engine optimization method based on an object storage of the embodiment 1.

### Embodiment 4

The disclosure provides an OLAP precomputation engine optimization method based on an object storage, including the following operations.

Operation instruction information is received, and any one operation of a read operation, a deletion operation, and a write operation is performed based on the operation instruction information.

Before performing an ending step of the deletion operation and the write operation, whether an object file exists is checked, if the object file exists, whether the object file does not exist is checked again after deleting the object file, the subsequent ending step can be executed only after checking that the object file does not exist.

When performing the read operation, whether the object file exists is checked, if the object file exists, the file is read, and if the object file does not exist, a retry is performed.

The operation that when performing the read operation, whether the object file exists is checked, if the object file exists, the file is read, and if the object file does not exist, a retry is performed includes the following operations.

Whether the file exists is checked; if the file does not exist, S3.1.2 is executed; and if the file exists, S3.1.4 is executed.

S3.1.2: whether the number of retries set by a retry mechanism is exceeded is judged; if the number of retries is not exceeded, S3.1.3 is executed; and if the number of retries is exceeded, the read operation is ended.

S3.1.3: waiting is performed according to a retry interval controlled by a system, S3.1.1 is returned to, and whether the file exists is checked again.

S3.1.4: a file read operation is executed.

Further before performing an ending step of the deletion operation and the write operation, whether an object file exists is checked, if the object file exists, whether the object file does not exist is checked again after deleting the object file, the following ending step can be executed only after checking that the object file does not exist.

S3.2.1: a deletion command is executed.

S3.2.2: whether the file exists is checked; if the file exists, S3.2.1 is returned to execute the deletion command again; and if the file does not exist, the deletion operation is ended.

Before performing an ending step of the deletion operation and the write operation, whether an object file exists is checked, if the object file exists, whether the object file does not exist is checked again after deleting the object file, the following ending step can be executed only after checking that the object file does not exist.

S3.3.1: whether the file exists is checked; if the file exists, S3.3.2 is executed; and if the file does not exist, S3.3.3 is executed.

S3.3.2: a deletion command is executed; and S3.3.1 is returned to check whether the file exists again.

S3.3.3: a write command is executed.

S3.3.4: waiting is performed until the write command is finished.

S.3.3.5: whether the file exists is checked again; if the file does not exist, S3.3.3 is returned to execute the write command again; and if the file exists, it is verified that the write operation is completed and ending is performed.

Further, the following steps are included.

S1.1: on an application level of the OLAP engine, in a process of modifying and constructing a model and a new index, a file renaming mapping table is added to a metadata layer.

S1.2: after receiving a renaming request for renaming a file A as a file B sent by the OLAP precomputation engine, a mapping relationship is added between the file A before renaming and the file B after renaming to a file mapping table of the metadata layer.

S1.3: after receiving a query request for querying the file B sent by the OLAP precomputation engine, the mapping relationship between the file A and the file B is queried in the file renaming mapping table of the metadata layer, a record matched with the file B is converted into the file A, and the file A is read in the object storage.

Further, the following steps are included.

S2.1: a path adaptation mechanism is added to retrieval logic of a bottom layer of the OLAP engine, and logical path inversion of a partition directory hierarchical structure of the file is corresponded to a prefix of the file in the object storage.

S2.2: after receiving the query request sent by the OLAP precomputation engine, the logical path of the index file is inverted through the path adaptation mechanism, and the file corresponding to the prefix is read in the object storage.

### Embodiment 5

The disclosure provides an OLAP precomputation engine optimization method based on an object storage, including the following operations.

A file renaming mapping table is added to an OLAP engine.

After receiving a renaming request for renaming a file A as a file B sent by the OLAP precomputation engine, a mapping relationship between the file A before renaming and the file B after renaming is added to a file mapping table of the metadata layer.

After receiving a query request for querying the file B sent by the OLAP precomputation engine, the mapping relationship between the file A and the file B is queried in the file renaming mapping table of the metadata layer, a record matched with the file B is converted into the file A, and the file A is read in the object storage.

### Embodiment 6

The disclosure provides an OLAP precomputation engine optimization method based on an object storage, including a receiving module, a first checking module and a second checking module.

The receiving module is configured to receive operation instruction information, and perform any one operation of a read operation, a deletion operation, and a write operation based on the operation instruction information.

The first checking module is configured to, before performing an ending step of the deletion operation and the write operation, check whether an object file exists, if the object file exists, check whether the object file does not exist again after deleting the object file, wherein the subsequent ending step can be executed only after checking that the object file does not exist.

The second checking module is configured to, responsive to performing the read operation, check whether the object file exists, if the object file exists, read the file, and if the object file does not exist, perform a retry.

### Embodiment 7

The disclosure provides an OLAP precomputation engine optimization method based on an object storage, including a mapping table adding module, a mapping relationship adding module, and a matching module.

The mapping table adding module is configured to add a file renaming mapping table to an OLAP engine.

The mapping relationship adding module is configured to, after receiving a renaming request for renaming a file A as a file B sent by the OLAP precomputation engine, add a mapping relationship between the file A before renaming and the file B after renaming to a file mapping table of the metadata layer.

The matching module is configured to, after receiving a query request for querying the file B sent by the OLAP precomputation engine, query the mapping relationship between the file A and the file B in the file renaming mapping table of the metadata layer, convert a record matched with the file B into the file A, and read the file A in the object storage.

### Embodiment 7

The disclosure provides an electronic device, including: at least one processor, and a memory in communication connection with the at least one processor, wherein the memory stores a computer program executable by the at least one processor, the computer program being executed by the at least one processor, so that the at least one processor executes various methods possibly designed by the embodiment 1, embodiment 2, embodiment 3, embodiment 4 and embodiment 5 of the disclosure.

According to one specific embodiment of the disclosure, the construction and query performance before using the optimization method provided by the disclosure and after using the optimization method provided by the disclosure is respectively tested and compared, the construction performance after the optimization is verified, the performance is not obviously lost under the situation of ensuring the data consistency, and the speed is obviously improved under the high concurrency complex query.

The above descriptions are preferred embodiments of the present application only and are not intended to limit the present application. Various modifications and alterations of the present application will occur to those skilled in the art. Any modifications, equivalents, improvements, and the like made within the spirit and principle of the present application are included within the protection scope the present application.

## Claims

1. An Online Analytical Processing (OLAP) precomputation engine optimization method based on an object storage, comprising the following steps:
S1: reducing an object renaming operation in the object storage;
S2: responsive to the fact that an OLAP precomputation engine implements query in the object storage, inverting a logical path of an index file; and
S3: responsive to the fact that the OLAP precomputation engine implements read, deletion, and write operations in the object storage, checking data consistency.

2. The OLAP precomputation engine optimization method based on an object storage of claim 1, wherein S1 comprises the following detailed steps:
S1.1: on an application level of the OLAP engine, in a process of modifying and constructing a model and a new index, adding a file renaming mapping table to a metadata layer;
S1.2: after receiving a renaming request for renaming a file A as a file B sent by the OLAP precomputation engine, adding a mapping relationship between the file A before renaming and the file B after renaming to a file mapping table of the metadata layer; and
S1.3: after receiving a query request for querying the file B sent by the OLAP precomputation engine, querying the mapping relationship between the file A and the file B in the file renaming mapping table of the metadata layer, converting a record matched with the file B into the file A, and reading the file A in the object storage.

3. The OLAP precomputation engine optimization method based on an object storage of claim 1, wherein S2 comprises the following detailed steps:
S2.1: adding a path adaptation mechanism to retrieval logic of a bottom layer of the OLAP engine, and corresponding logical path inversion of a partition directory hierarchical structure of the file to a prefix of the file in the object storage; and
S2.2: after receiving the query request sent by the OLAP precomputation engine, inverting the logical path of the index file through the path adaptation mechanism, and reading the file corresponding to the prefix in the object storage.

4. The OLAP precomputation engine optimization method based on an object storage of claim 1, wherein in S3 of checking data consistency, responsive to the fact that the OLAP engine reads an object, a retry mechanism for controlling retry interval speed increase is added.

5. The OLAP precomputation engine optimization method based on an object storage of claim 1, wherein in S3 of checking data consistency, logical verification is added to the read operation, the deletion operation and the write operation, whether the file exists being checked before reading, whether the file does not exist being checked again after deleting the object, and responsive to new construction of an object, if the file exists, the object being newly constructed only after deleting the object.

6. The OLAP precomputation engine optimization method based on an object storage of claim 5, wherein S3 of implementing a read operation and checking data consistency comprises the following detailed steps:
S3.1.1: checking whether a file exists; if the file does not exist, executing S3.1.2; if the file exists, executing S3.1.4;
S3.1.2: judging whether the number of retries set by a retry mechanism is exceeded; if the number of retries is not exceeded, executing S3.1.3; if the number of retries is exceeded, ending the read operation;
S3.1.3: waiting according to a retry interval controlled by a system, returning to S3.1.1, and checking whether the file exists again; and
S3.1.4: executing a file read operation.

7. The OLAP precomputation engine optimization method based on an object storage of claim 5, wherein S3 of implementing a deletion operation and checking data consistency comprises the following detailed steps:
S3.2.1: executing a deletion command; and
S3.2.2: checking whether the file exists; if the file exists, returning to S3.2.1 to execute the deletion command again; and if the file does not exist, ending the deletion operation.

8. The OLAP precomputation engine optimization method based on an object storage of claim 5, wherein S3 of implementing a deletion operation and checking data consistency comprises the following detailed steps:
S3.3.1: checking whether the file exists; if the file exists, executing S3.3.2; if the file does not exist, executing S3.3.3;
S3.3.2: executing a deletion command; returning to S3.3.1 to check whether the file exists again;
S3.3.3: executing a write command;
S3.3.4: waiting until the write command is finished; and
S.3.3.5: checking whether the file exists again; if the file does not exist, returning to S3.3.3 to execute the write command again; and if the file exists, verifying that the write operation is completed and ending.

9. An Online Analytical Processing (OLAP) precomputation engine optimization system based on an object storage, applying the OLAP precomputation engine optimization method based on an object storage of any one of claims 1 to 8, comprising at least one of a file renaming conversion module, an inverted path conversion module and a data consistency check module, wherein:
the file renaming conversion module, configured to match a mapping relationship of a file before and after renaming through a file mapping table added to a metadata layer, and reduce a renaming operation on a bottom layer of a file system;
the inverted path conversion module, configured to add a path adaptation mechanism to retrieval logic of the bottom layer of an OLAP engine, correspond logical path inversion of a partition directory hierarchical structure of the file to a prefix of the file in the object storage, and implement rapid query and reading of the object storage; and
the data consistency check module, configured to add logical verification to a read operation, a deletion operation, and a write operation and check data consistency.

10. A storage medium having a computer program stored therein, wherein the computer program is executed to execute the OLAP precomputation engine optimization method based on an object storage of any one of claims 1 to 8.

11. An Online Analytical Processing (OLAP) precomputation engine optimization method based on an object storage, comprising:
receiving operation instruction information, and performing any one operation of a read operation, a deletion operation, and a write operation based on the operation instruction information;
before performing an ending step of the deletion operation and the write operation, checking whether an object file exists, if the object file exists, checking whether the object file does not exist again after deleting the object file, wherein the subsequent ending step only can be executed after checking that the object file does not exist; and
responsive to performing the read operation, checking whether the object file exists, if the object file exists, reading the file, and if the object file does not exist, performing a retry.

12. The OLAP precomputation engine optimization method based on an object storage of claim 11, wherein responsive to performing the read operation, checking whether the object file exists, if the object file exists, reading the file, and if the object file does not exist, performing a retry comprises:
checking whether the file exists; if the file does not exist, executing S3.1.2; if the file exists, executing S3.1.4;
S3.1.2: judging whether the number of retries set by a retry mechanism is exceeded; if the number of retries is not exceeded, executing S3.1.3; if the number of retries is exceeded, ending the read operation;
S3.1.3: waiting according to a retry interval controlled by a system, returning to S3.1.1, and checking whether the file exists again; and
S3.1.4: executing a file read operation.

13. The OLAP precomputation engine optimization method based on an object storage of claim 11, wherein before performing an ending step of the deletion operation and the write operation, checking whether an object file exists, if the object file exists, checking whether the object file does not exist again after deleting the object file, wherein the following step only can be executed after checking that the object file does not exist comprises
S3.2.1: executing a deletion command; and
S3.2.2: checking whether the file exists; if the file exists, returning to S3.2.1 to execute the deletion command again; and if the file does not exist, ending the deletion operation.

14. The OLAP precomputation engine optimization method based on an object storage of claim 11, wherein before performing an ending step of the deletion operation and the write operation, checking whether an object file exists, if the object file exists, checking whether the object file does not exist again after deleting the object file, wherein the following step only can be executed after checking that the object file does not exist:
S3.3.1: checking whether the file exists; if the file exists, executing S3.3.2; if the file does not exist, executing S3.3.3;
S3.3.2: executing a deletion command; returning to S3.3.1 to check whether the file exists again;
S3.3.3: executing a write command;
S3.3.4: waiting until the write command is finished; and
S.3.3.5: checking whether the file exists again; if the file does not exist, returning to S3.3.3 to execute the write command again; and if the file exists, verifying that the write operation is completed and ending.

15. The OLAP precomputation engine optimization method based on object storage of claim 11, comprising:
S1.1: on an application level of the OLAP engine, in a process of modifying and constructing a model and a new index, adding a file renaming mapping table to a metadata layer;
S1.2: after receiving a renaming request for renaming a file A as a file B sent by the OLAP precomputation engine, adding a mapping relationship between the file A before renaming and the file B after renaming to a file mapping table of the metadata layer; and
S1.3: after receiving a query request for querying the file B sent by the OLAP precomputation engine, querying the mapping relationship between the file A and the file B in the file renaming mapping table of the metadata layer, converting a record matched with the file B into the file A, and reading the file A in the object storage.

16. The OLAP precomputation engine optimization method based on object storage of claim 11, comprising:
S2.1: adding a path adaptation mechanism to retrieval logic of a bottom layer of the OLAP engine, and corresponding logical path inversion of a partition directory hierarchical structure of the file to a prefix of the file in the object storage; and
S2.2: after receiving the query request sent by the OLAP precomputation engine, inverting the logical path of the index file through the path adaptation mechanism, and reading the file corresponding to the prefix in the object storage.

17. An Online Analytical Processing (OLAP) precomputation engine optimization method based on an object storage, comprising:
adding a file renaming mapping table to an OLAP engine;
after receiving a renaming request for renaming a file A as a file B sent by the OLAP precomputation engine, adding a mapping relationship between the file A before renaming and the file B after renaming to a file mapping table of the metadata layer; and
after receiving a query request for querying the file B sent by the OLAP precomputation engine, querying the mapping relationship between the file A and the file B in the file renaming mapping table of the metadata layer, converting a record matched with the file B into the file A, and reading the file A in the object storage.

18. An Online Analytical Processing (OLAP) precomputation engine optimization apparatus based on an object storage, comprising:
a receiving module, configured to receive operation instruction information, and perform any one operation of a read operation, a deletion operation, and a write operation based on the operation instruction information;
a first checking module, configured to, before performing an ending step of the deletion operation and the write operation, check whether an object file exists, if the object file exists, check whether the object file does not exist again after deleting the object file, wherein the subsequent ending step can be executed only after checking that the object file does not exist; and
a second checking module, configured to, responsive to performing the read operation, check whether the object file exists, if the object file exists, read the file, and if the object file does not exist, perform a retry.

19. An Online Analytical Processing (OLAP) precomputation engine optimization apparatus based on an object storage, comprising:
a mapping table adding module, configured to add a file renaming mapping table to an OLAP engine;
a mapping relationship adding module, configured to, after receiving a renaming request for renaming a file A as a file B sent by the OLAP precomputation engine, add a mapping relationship between the file A before renaming and the file B after renaming to a file mapping table of the metadata layer; and
a matching module, configured to, after receiving a query request for querying the file B sent by the OLAP precomputation engine, query the mapping relationship between the file A and the file B in the file renaming mapping table of the metadata layer, convert a record matched with the file B into the file A, and read the file A in the object storage.

20. An electronic device, comprising: at least one processor, and a memory in communication connection with the at least one processor, wherein the memory stores a computer program executable by the at least one processor, the computer program being executed by the at least one processor, so that the at least one processor executes the method of any one of claims 1 to 8 and claims 11 to 17.
